# EUROPEAN PATENT SPECIFICATION

(11) **EP 2 086 679 B1**
(45) Date of publication and mention of the grant of the patent: **24.04.2013**
(21) Application number: 07824991.9
(22) Date of filing: 25.10.2007
(51) Int. Cl.: B01L 3/00, G01N 21/11, G01N 33/493

(54) **CONTAINER FOR ANALYZING LIQUID**
BEHÄLTER ZUR ANALYSE VON FLÜSSIGKEIT
RÉCIPIENT DESTINÉ À L'ANALYSE DE LIQUIDES

(30) Priority: 26.10.2006 HU 0600806
(43) Date of publication of application: 12.08.2009
(73) Proprietor: 77 Elektronika Müszeripari Kft., 1116 Budapest (HU)
(72) Inventor: NEMETH, Ferenc, 2084 Pilisszentiván (HU)
(74) Representative: Kereszty, Marcell
(86) International application number: PCT/HU2007/000099
(87) International publication number: WO 2008/050165

(56) References cited:
- WO-A-2005/110028
- WO-A-2006/116616
- US-A- 4 436 631
- US-A1- 2006 233 667
- US-B2- 7 016 033

## Description

### TECHNICAL FIELD

The invention relates to a cuvette for analyzing various liquids, for example urine.

### BACKGROUND ART

For the analysis of liquids, for example urine, there are many prior art container designs. For the purpose of an optical analysis, in general shallow containers or cuvettes are used, which enable the analysis (preferably by microscopic or digital image processing methods) of a liquid filled into the analyzing space between transparent window sections arranged one below the other. To allow a simple manufacturing method, these cuvettes consist of an upper part and a lower part adjoined in parallel. The cuvettes comprise an inlet aperture for charging the liquid to be analyzed, and an outlet aperture through which the air escapes from the cuvette when the liquid is charged.

Cuvettes suitable for material analysis and especially liquid analysis are disclosed, for example, in US 7,016,033 B2, US 2001/0039056 A1, US 2005/0170522 A1, US 2006/0233667 A1, EP 0134627 A2, EP 1188483 A2, WO 99/44743, WO 2005/100539 A2, WO 2005/110028 A2 and WO 2006/116616 A2.

The disadvantage of prior art solutions is that they fail to comprise such structural designs which would facilitate the precise execution of charging the liquid into the cuvettes, prevent the escaping of liquid during analysis, enable accurate focusing for an optical analysis and hinder the emerging of bubbles in the liquid when it is charged.

### DESCRIPTION OF THE INVENTION

It is an object of the invention to provide a cuvette, which is exempt from the disadvantages of prior art approaches. It is another objective of the invention to create a cuvette which can be manufactured at a low cost, preferably in a disposable form. A further object of the invention is to make sure that the charging of liquid into the cuvette is carried out as precisely as possible, without generating bubbles. A further object is to provide a cuvette which efficiently prevents the escaping of liquid during an analysis and enables appropriate focusing for the purposes of an optical analysis.

The invention is defined by the features of to claim 1. Preferred embodiments of the invention are defined by the dependent claims.

### BRIEF DESCRIPTION OF THE DRAWINGS

The invention will hereinafter be described on the basis of a preferred embodiment depicted by the drawings, where
Fig. 1 is a top view of an upper part of a cuvette used as an example,
Fig. 2 is a bottom view of the upper part shown in Fig. 1,
Fig. 3 is a perspective view of the bottom shown in Fig. 2,
Fig. 4 is a perspective view of the top shown in Fig. 1,
Fig. 5 is a cross sectional view taken across the inlet aperture and outlet aperture of the upper part as shown in Figs. 1 to 4,
Fig. 6 is a bottom view of the lower part of the cuvette,
Fig. 7 is a top view of the lower part shown in Fig. 6,
Fig. 8 is a perspective view of the top shown in Fig. 7,
Fig. 9 is a perspective view of the bottom shown in Fig. 6,
Fig. 10 is a cross sectional view taken across a transparent window part of the lower part shown in Figs. 6 to 9,
Fig. 11 is a top view of the cuvette assembled from the parts shown in the previous figures,
Fig. 12 is a cross sectional view along plane A-A of the cuvette in Fig. 11,
Fig. 13 is a cross sectional view along plane B-B of the cuvette in Fig. 11, and
Fig. 14 is a cross sectional view along plane C-C of the cuvette shown in Fig. 11.

### MODES FOR CARRYING OUT THE INVENTION

The cuvette according to the invention - preferably for urine analysis - is designed for an optical analysis of a liquid charged therein. The optical analysis is carried out preferably by means of a microscope, under illumination. Prior to the analysis the filled up cuvette is centrifuged that results the precipitation of the urine-sediment on the inner polished surface of the transparent lower window part in the bottom section of the cuvette. One of the applications of the cuvette is the expediently digital analyzing of the image generated from this sediment.

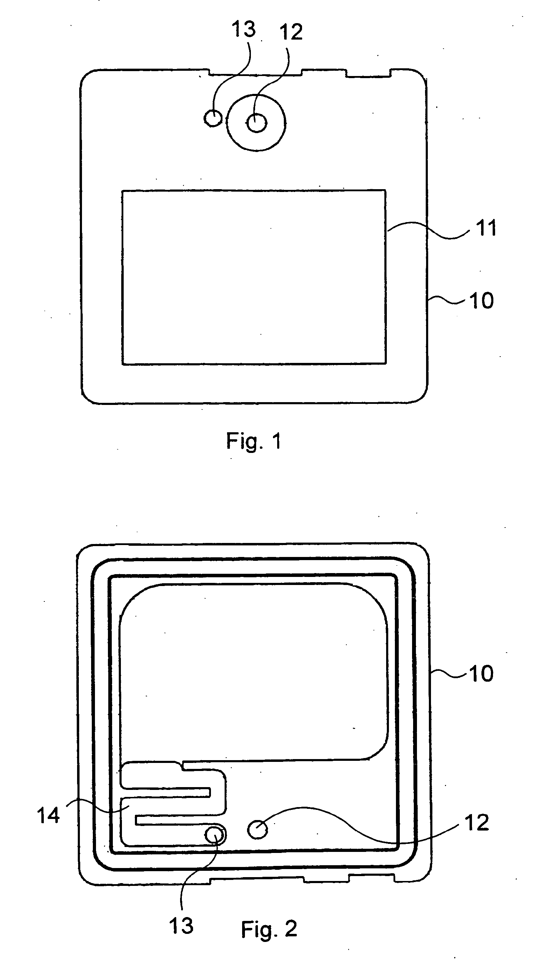

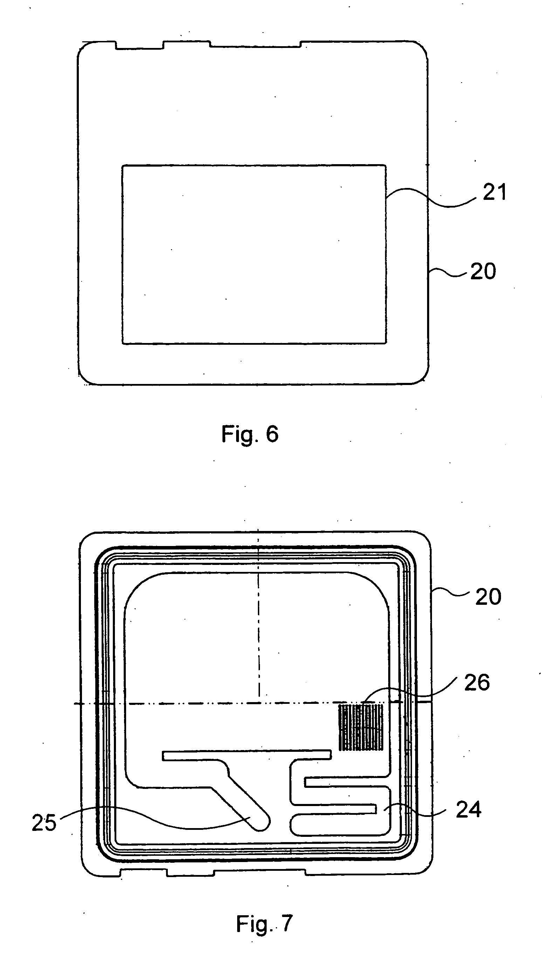

The cuvette according to the invention consists of an upper part 10 shown in Figs. 1 to 5 and a lower part 20 shown in Figs. 6 to 10. The upper part 10 shown in Fig. 1 is formed with a transparent upper window part 11 designed for optical analysis. In order to improve the accuracy of optical analysis, the upper window part 11 has a polished surface on both sides.

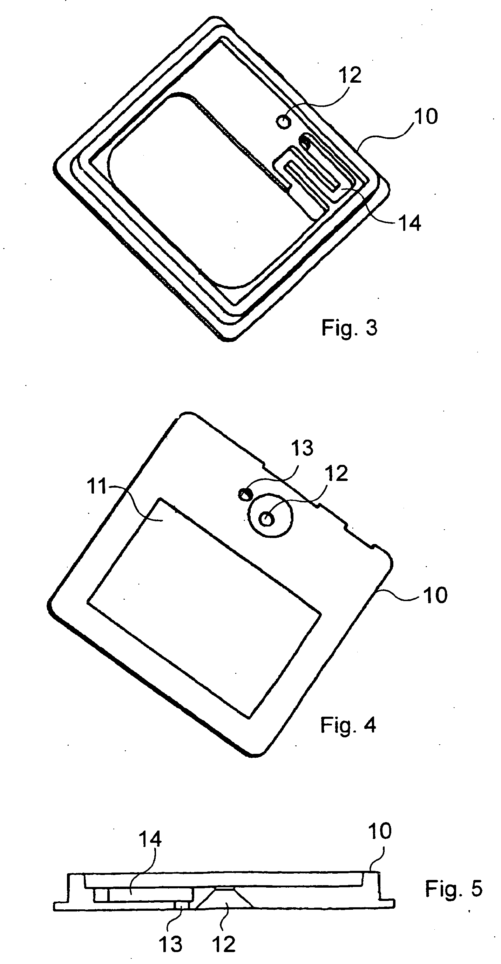

Furthermore, in the upper part 10 there is an inlet aperture 12 starting from a conic indentation, and an outlet aperture 13 designed for discharging the air from the cuvette when the liquid is filled in. Fig. 2 shows the bottom view (inner side) of the upper part 10, which figure depicts clearly the inlet aperture 12 and the inner mouth of the outlet aperture 13. According to an important characteristic of the invention, a buffer passage is arranged between the analyzing space below the upper window part 11 and the outlet aperture 13. In the depicted preferred embodiment, this buffer passage consists of two buffer passage parts. Fig. 2 shows the upper buffer passage part 14. Figs. 3 and 4 show the inner and outer perspective views of the upper part 10, to depict appropriately the design of apertures and passages in perspective. In particular Fig. 3 shows that even the analyzing space of the cuvette has two sections; the upper analyzing space-section is located in the upper part 10 of the cuvette.

Fig. 5 shows a cross sectional view of the upper part 10 of the cuvette, across the axes of the inlet aperture 12 and the outlet aperture 13.

Fig. 6 shows a bottom view (outer side) of a lower part 20 of the cuvette used by way of example. The lower part 20 is also fitted with a transparent lower window part 21, which is polished on both sides. According to the invention, the thickness of the lower window part 21 has been reduced to less than 0.6 mm, which resulted in a substantial improvement of picture sharpness. In this way the improved recognition of the sediment particles in the urine sample can be ensured.

Fig. 7 shows a top view (inner side) of the lower part 20, which also comprises a lower buffer passage part 24 representing one part of the buffer passage according to the invention. The transparent lower window part 21 of the lower part 20 is fitted furthermore with a pattern - preferably a ribbing 26 - which facilitates the focusing of optical analysis. Preferably, the height of the ribs in the ribbing 26 is around 0.02 mm. The ribs assist in positioning the focus of the microscope used for the analysis. Hence, the focus of the optical analysis can be directed in a simple way and in the given case automatically to the urine sediment precipitating on the inner polished surface of the lower window part 21.

Designed for adjoining the inlet aperture 12, an inlet passage 25 conducting the liquid to be analyzed to the analyzing space is formed in the lower part 20, which also comprises a lower space-section of the analyzing space located between the transparent window parts.

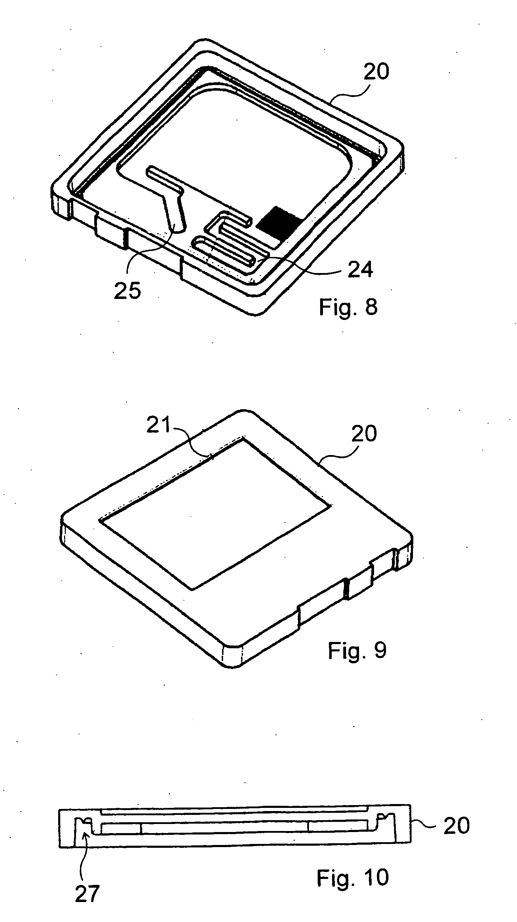

Figs. 8 and 9 depict in perspective the inner and outer views of the lower part 20.

Fig. 10 shows a cross sectional view of the lower part 20 across the transparent lower window part 21. The figure clearly depicts a melting edge 27 surrounded by walls within a flange of the lower part 20, said melting edge 27 is designed for adjoining a protruding part running around the edge of the upper part 10. The height of the melting edge 27 is preferably approx. 0.25 mm and its side surfaces include an angle of approximately 60° with each other. In manufacturing the cuvette, the upper part 10 and the lower part 20 are preferably fixed to each other by ultrasonic welding, as a result of which the melting edge 27 melts on the surface of the protruding part running around the upper part 10. In such a way, a simple and low cost leakproof welded joint can be achieved.

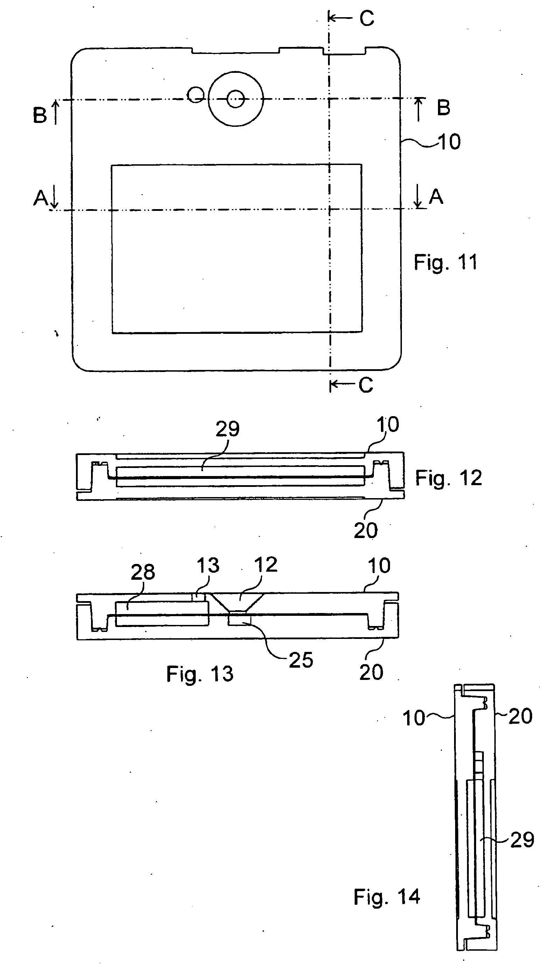

Fig. 11 shows a top view of the assembled cuvette and Figs. 12, 13 and 14 depict cross sectional views taken along planes A-A, B-B and C-C marked in Fig. 11. Figs. 12 and 14 appropriately depict the analyzing space 29 confined by the upper window part 11 and the lower window part 21, said analyzing space 29 being formed according to the description above by the space sections in the two cuvette parts. Fig. 13 also shows a cross-section of the buffer passage 28 formed by the upper buffer passage part 14 and the lower buffer passage part 24.

In accordance with the depicted preferred embodiment, the buffer passage 28 is designed with bends between the analyzing space 29 and the outlet aperture 13. By these bends, the length of the buffer passage 28 can be made longer than the distance between the analyzing space 29 and the outlet aperture 13, preferably at least doubling this distance. In the preferred embodiment depicted, in order to create the longest possible buffer passage 28, a snake-like wriggling passage design is used.

The buffer passage 28 serves for an accurate adjustment of the liquid volume to be analyzed. Prior to the analysis, the liquid is charged into the analyzing space 29 and the buffer passage 28 is filled up to a pre-specified length, preferably up to approx. two-thirds. The snake-like wriggling buffer passage 28 enables the conducting of the charging process in a controlled and automatic way by sensing optically whether for example two-thirds of the buffer passage has been reached. The wriggling passage design enables the use of a lower cost charging system having a higher response time. In addition, when the appropriate charging volume is achieved, even when the response to a charge stop command is eventually inaccurate or delayed, the liquid is still prevented from escaping through the outlet aperture 13.

Consequently, prior to the optical analysis implemented by means of the inventive cuvette, the cuvette is centrifuged. In prior art cuvette designs, the inlet aperture and the outlet aperture were arranged in a corner or in the region of a corner of the cuvette. It is shown by the depicted preferred embodiment that the inlet aperture 12 and the outlet aperture 13 are arranged further from the corners of the cuvette, preferably in the middle cuvette-area between two adjacent corners. The purpose of this design is to make sure that the liquid flowing towards the corners when the cuvette is centrifuged does not escape via the inlet aperture 12 and the outlet aperture 13. In case this is not prevented, the escaping liquid is replaced by air, which is then located stochastically in the form of bubbles in the liquid sample, thereby making it practically impossible to perform an optical analysis of the sample.

It is shown furthermore in the depicted preferred embodiment that the analyzing space 29 has a roundedness of a larger radius at the corners located further from the inlet aperture 12 than at the corners closer to the inlet aperture 12. The radius of corners having a roundedness of a larger radius is preferably at least 2 mm. These rounded corners facilitate the uniform flowing of the liquid at the time of charging, and at these critical points they prevent the generating of air bubbles when charging the liquid.

The upper part 10 and the lower part 20 of the cuvette according to the invention are preferably made by injection moulding from clear plastic. This way the production of disposable cuvettes becomes possible.

## Claims

1. A cuvette for optically analyzing a liquid, said cuvette being assembled from
- an upper part (10) having a transparent upper window part (11), and
- a lower part (20) adjoining the upper part (10), said lower part (20) having a transparent lower window part (21), wherein
- an analyzing space (29) is located between the upper window part (11) and the lower window part (21), and wherein the cuvette comprises
- an inlet aperture (12) for charging the liquid into the analyzing space (29),
- an outlet aperture (13) for allowing air escape from the cuvette during charging, and
- a buffer passage (28) between the analyzing space (29) and the outlet aperture (13), wherein
- both the inlet aperture (12) and the outlet aperture (13) are arranged in the upper part (10) and away from the corners of the cuvette, in a middle cuvette area between two adjacent corners,
- the cuvette is adapted for being centrifuged in a filled up state such that precipitation of a sediment occurs on the inner surface of the transparent lower window part.

2. The cuvette according to claim 1, **characterized in that** the transparent lower window part (21) is fitted with a pattern, preferably a ribbing (26) for facilitating a focusing of the optical analysis to the sediment precipitated on the inner surface of the transparent lower window part (21).

3. The cuvette according to claim 1, **characterized in that** the analyzing space (29) has a roundedness of a larger radius at the corners away from the inlet aperture (12) than at the corners closer to the inlet aperture (12).

4. The cuvette according to claim 3, **characterized in that** the corners of the analyzing space (29) away from the inlet aperture have a roundedness of at least 2 mm radius.

5. The cuvette according to claim 1, **characterized in that** the analyzing space (29) has an upper space-section formed in the upper part (10), and a lower space-section formed in the lower part (20).

## Patentansprüche

1. Küvette zum optischen Analysieren einer Flüssigkeit, wobei die Küvette zusammengesetzt ist aus:
- einem oberen Teil (10) mit einem transparenten oberen Fensterteil (11), und
- einem unteren Teil (20), der an den oberen Teil (10) angrenzt, wobei der untere Teil (20) einen transparenten unteren Fensterteil (21) aufweist, wobei
- ein Analyseraum (20) zwischen dem oberen Fensterteil (11) und dem unteren Fensterteil (21) angeordnet ist, und wobei die Küvette aufweist:
- eine Einlassöffnung (12) zum Laden der Flüssigkeit in den Analyseraum (29),
- eine Auslassöffnung (13), um eine Luftentweichung aus der Küvette während des Ladens zu gestatten, und
- einen Pufferdurchgang (28) zwischen dem Analyseraum (29) und der Auslassöffnung (13), wobei
- sowohl die Einlassöffnung (12) als auch die Auslassöffnung (13) in dem oberen Teil (10) und zu den Ecken der Küvette beabstandet, in einem Mittel-Küvetten-Bereich zwischen zwei benachbarten Ecken angeordnet sind,
- die Küvette dazu ausgebildet ist, in einem aufgefüllten Zustand zentrifugiert zu werden, so dass an der inneren Fläche des transparenten unteren Fensterteils Ausfällung eines Sediments auftritt.

2. Küvette nach Anspruch 1, **dadurch gekennzeichnet, dass** der transparente untere Fensterteil (21) mit einem Muster ausgestattet ist, vorzugsweise einer Riffelung (26), zum Vereinfachen eines Fokussierens der optischen Analyse auf das an der inneren Fläche des transparenten unteren Fensterteils (21) ausgefällten Sediments.

3. Küvette nach Anspruch 1, **dadurch gekennzeichnet, dass** der Analyseraum (29) eine Rundung mit einem Radius aufweist, der an den von der Einlassöffnung (12) entfernten Ecken größer ist als an den der Einlassöffnung (12) näher gelegenen Ecken.

4. Küvette nach Anspruch 3, **dadurch gekennzeichnet, dass** die von der Einlassöffnung entfernten Ecken des Analyseraums (29) eine Rundung von mindestens 2 mm Radius aufweisen.

5. Küvette nach Anspruch 1, **dadurch gekennzeichnet, dass** der Analyseraum (29) einen in dem oberen Teil (10) ausgebildeten oberen Raum-Abschnitt, und einen in dem unteren Teil (20) ausgebildeten unteren Raum-Abschnitt aufweist.

## Revendications

1. Cuvette pour analyser optiquement un liquide, ladite cuvette étant assemblée à partir de
- une partie supérieure (10) comportant une partie fenêtre supérieure transparente (11), et
- une partie inférieure (20) contiguë à la partie supérieure (10), ladite partie inférieure (20) comportant une partie fenêtre inférieure transparente (21), dans laquelle
- un espace d'analyse (29) est positionné entre la partie fenêtre supérieure (11) et la partie fenêtre inférieure (21), et dans laquelle la cuvette comprend
- une ouverture d'entrée (12) pour charger le liquide dans l'espace d'analyse (29),
- une ouverture de sortie (13) pour permettre à de l'air de sortir de la cuvette durant un chargement, et
- un passage tampon (28) entre l'espace d'analyse (29) et l'ouverture de sortie (13), dans laquelle
- l'ouverture d'entrée (12) et l'ouverture de sortie (13) sont toutes les deux agencées dans la partie supérieure (10) et éloignées des coins de la cuvette, dans une zone de cuvette médiane entre deux coins adjacents,
- la cuvette est adaptée pour être centrifugée dans un état rempli de sorte que la précipitation d'un sédiment se produise sur la surface intérieure de la partie fenêtre inférieure transparente.

2. Cuvette selon la revendication 1, **caractérisé en ce que** la partie fenêtre inférieure transparente (21) est équipée d'une configuration, de préférence un nervurage (26) pour faciliter une concentration de l'analyse optique sur le sédiment précipité sur la surface intérieure de la partie fenêtre inférieure transparente (21).

3. Cuvette selon la revendication 1, **caractérisé en ce que** l'espace d'analyse (29) présente un arrondi d'un rayon plus important au niveau des coins éloignés de l'ouverture d'entrée (12) qu'au niveau des coins plus près de l'ouverture d'entrée (12)

4. Cuvette selon la revendication 3, **caractérisé en ce que** les coins de l'espace d'analyse (29) éloignés de l'ouverture d'entrée présentent un arrondi d'un rayon d'au moins 2 mm.

5. Cuvette selon la revendication 1, **caractérisé en ce que** l'espace d'analyse (29) comporte une section d'espace supérieur formée dans la partie supérieure (10), et une section d'espace inférieure formée dans la partie inférieure (20).
